Europäisches Patentamt

European Patent Office

Office européen des brevets

(19)

(11) Publication number: **0 320 215 B1**

# EUROPEAN PATENT SPECIFICATION

(12)

(45) Date of publication of patent specification: **17.03.93** (51) Int. Cl.⁵: **B60C 11/14**, B60C 11/18

(21) Application number: **88311550.3**

(22) Date of filing: **06.12.88**

(54) **Radial tyre.**

(30) Priority: **07.12.87 JP 310608/87**

(43) Date of publication of application:
**14.06.89 Bulletin 89/24**

(45) Publication of the grant of the patent:
**17.03.93 Bulletin 93/11**

(84) Designated Contracting States:
**DE FR GB**

(56) References cited:
**DE-A- 2 606 703**
**GB-A- 1 124 915**

**PATENT ABSTRACTS OF JAPAN, vol. 10, no.
307 (M-527)[2363], 18th October 1986; & JP-
A-61 119 409 (BRIDGESTONE CORP.)
06-06-1986**

**PATENT ABSTRACTS OF JAPAN, vol. 9, no.
282 (M-428)[2005], 9th November 1985; & JP-
A-60 124 507 (YOKOHAMA GOMU K.K.)
03-07-1985**

**PATENT ABSTRACTS OF JAPAN, vol. 9, no.
242 (M-417)[1965], 28th September 1985; &
JP-A-60 94 805 (YOKOHAMA GOMU K.K.)
28-05-1985**

**PATENT ABSTRACTS OF JAPAN, vol. 11, no.
196 (M-601)[2643], 24th June 1987; & JP-A-62
20 704 (TOYO TIRE & RUBBER CO. LTD)
29-01-1987**

(73) Proprietor: **SUMITOMO RUBBER INDUSTRIES
LIMITED
No. 1-1, Tsutsui-cho 1-chome
Chuo-ku Kobe-shi Hyogo 651(JP)**

(72) Inventor: **Uchida, Mamoru
5-29 Nishiakashi Kitamachi 3-chome
Akashi-shi Hyogo-ken(JP)**
Inventor: **Taguchi, Takafumi
16-106-206 Edagawacho
Nishinomiya-shi Hyogo-ken(JP)**
Inventor: **Muraoka, Kiyoshige
3-2 Oyashiki douri 4-chome
Nagata-ku Kobe-shi Hyogo-ken(JP)**
Inventor: **Fukumoto, Takahiro
14-115-302 Nishiochiai 5-chome
Suma-ku Kobe-shi Hyogo-ken(JP)**

(74) Representative: **Stewart, Charles Geoffrey
SP TYRES UK LIMITED Tyre Technical Division
Fort Dunlop Birmingham B24 9OT (GB)**

EP 0 320 215 B1

Rank Xerox (UK) Business Services
(3.10/3.5x/3.0.1)

**Description**

This invention relates to a radial tyre and in particular to a tread pattern capable of preventing uneven wear derived from tread grooves.

Radial tyres enhanced in wear resistance and durability by rigid belts made of metal cords or the like between the tread rubber and the carcass ply are now used widely in many applications including passenger cars.

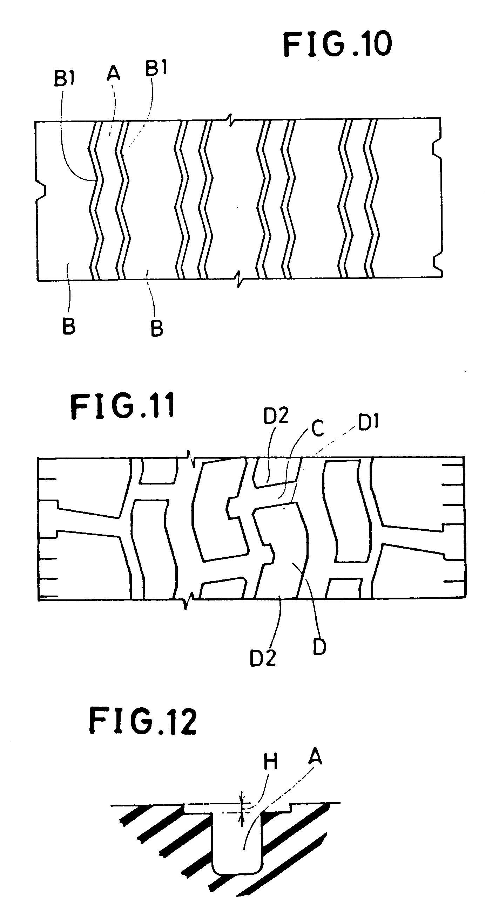

In such radial tyres, in order to improve traction performance, braking performance, heat resistance and other properties, various tread patterns are formed in the surface of the tread. Patterns are known such as the rib type having ribs B formed by zigzag circumferentially extending longitudinal grooves A as shown in Fig.10, and the block type having blocks D formed by transverse grooves C linking the longitudinal grooves A as shown in Fig.11.

However, in the rib type of pattern shown in Fig.10, while running on well paved roads for a long period, the corners B1 of the ribs B which project into the longitudinal grooves A are worn away in a step form with a height H shown in Fig.12. The abrasion starts from the corners B1 then spreads in the axial direction of the tyre and also in the circumferential direction to be linked like a rail in the circumferential direction. This phenomenon is generally known as railway wear.

Also in block patterns as shown in Fig.11, in the course of running, as compared with the leading edge D1 at which the block D contacts with the road surface, the trailing edge D2 is worn in a step like form due to deviation from the road surface along with movement towards the transverse groove C. This wear is generally known as heel-and-toe wear.

Such types of uneven wear not only impair the appearance of the tyre, but also shorten the service life, reduce steering stability and braking performance, and induce various other problems. This uneven wear becomes more obvious in parts of the ground contacting region, especially in the shoulder portion, where movement on the road surface is great, and it tends to occur particularly in radial tyres having tread rigidity.

To solve such problems, for example, the Japanese Laid-open Patent Sho. 53-80602 proposed to make the groove walls with a rubber of high wear resistance. Furthermore, Japanese Patent Publications Sho. 57-54325 and Sho. 57-15005 disclosed the formation of holes at intervals in the groove walls where uneven wear is likely to occur, the Japanese Patent Publications Sho. 50-29201 and Sho. 57-54324 tried to prevent uneven wear by cutting notches in the groove walls.

However, when holes or notches were provided when running a rough road, the local stresses were increased and chipping was caused, which caused increased uneven wear.

Furthermore Japanese Patent Publication JP-A-61119409 describes a tyre with groove walls made of a fibre reinforced rubber having the features disclosed in the preamble of claim 1.

When the hardness of the grooves wall is used, the rigidity in the peripheral direction of the groove walls is increased, and the follow-up performance in the peripheral direction of the road surface is blocked which causes a large stress when the corners B1 of the ribs B or blocks D move towards the groove of the trailing edge D2, which may also encourage uneven wear.

It is hence a primary object of this invention to provide a radial tyre capable of suppressing the uneven wear such as railway wear and heel-and-toe wear derived from tread grooves.

As a result of further investigation into uneven wear derived from grooves, the inventors have found out that it is preferably to lower the stress during movement of the tread rubber when it moves outwards by lowering the peripheral rigidity in the circumferential direction of the tyre, and that the wear rate at the groove walls can be decreased by improving the radial rigidity at the groove walls, that is, the compressive rigidity of compression of the tread rubber, so that the uneven wear caused by the groove can be decreased by enhancing the wear resistance of the area while lessening the stress caused at the time of movement towards the groove at the trailing side.

Accordingly the invention provides a radial tyre having a tread provided with a groove with opposed groove walls, said groove walls made of a fibre reinforced rubber material disposed on each side of the groove to form said groove walls, said fibre reinforced rubber material being compounded of a rubber base and short fibres said rubber base comprising at least one of natural rubber, polyisoprene rubber, butadiene rubber and polybutadiene rubber and said short fibres in each groove wall being made of organic material, mixed at 5 to 30 parts by weight of fibres to 100 parts by weight of the rubber base in the reinforced rubber material, and oriented in the depthwise direction of the groove along the surface of the groove wall, characterised in that the reinforced rubber material has the following ratios between its complex elastic modulus Ea* in the direction of orientation of the short fibres, its complex elastic modulus Eb* in the direction perpendicular to said orientation direction, and the complex elastic modulus Ec* of the rubber in the other parts of the tread than the groove wall parts

1.2 < Ea*/Eb* < 5,
1.2 < Ea*/Ec* < 3, and
0.6 < Eb*/Ec* 1.

Embodiments of the present invention will now be described in detail by way of example only, referring to the accompanying drawings, in which:

Fig.1 is a plan view showing an embodiment of the present invention;

Fig.2 is a sectional view taken along line I-I of Fig.1.

Fig.3 is a plan view showing another embodiment;

Fig.4 is a sectional view taken along line II-II of Fig.3,

Fig.5 is a plan view showing another embodiment;

Fig.6 is a sectional view taken along line II-III of Fig.5;

Fig.7 is a perspective view showing an example of a raw tyre adhered with strips of a reinforcing rubber material sheet;

Fig.8 is a perspective view showing a method of forming the reinforced rubber sheet; Fig.9 is a perspective view showing a raw tyre adhered with pieces of the reinforced rubber material sheet to form a tyre of block patter,

Fig.10 and Fig.11 are plan views each showing a conventional tyre; and

Fig.12 is a sectional view showing a worn state.

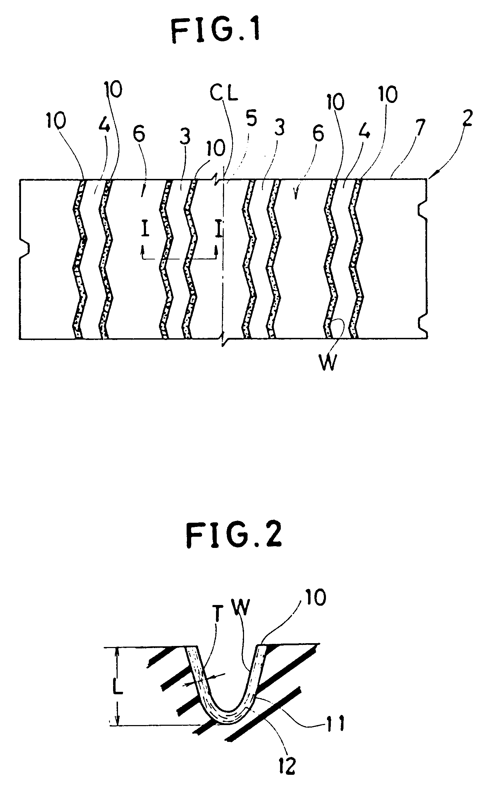

In Fig.1 and Fig.2 is shown a radial tyre tread 2 of the rib type provided with two zigzag longitudinal grooves 3 one on each side of the tyre equator CL and zigzag longitudinal grooves 4 each axially outwards thereof, thereby forming a centre rib 5 between the two longitudinal grooves 3, two middle ribs 6 one between the longitudinal grooves 3 and 4, and two side ribs 7 one between axially outer edge of the longitudinal groove 4 and the edge of the tread 2.

The groove walls 10 of the longitudinal grooves 3 & 4 are formed by using a reinforced rubber material.

The reinforced rubber material has short fibres 12 mixed into its rubber base 11 which comprises at least one of natural rubber, polyisoprene, butadiene rubber and polybutadiene rubber, and various additives and reinforcing agents such as carbon black and silica blended into the rubber base.

The short fibres 12 embedded in the reinforced material are oriented in a uniform direction. The properties are specially selected as follows:-

The ratio $Ea^*/EWb^*$ of the complex elastic modulus $Ea^*$ in the orientation direction of the short fibres 12, of the reinforced rubber material to the complex elastic modulus $Eb^*$ in a direction perpendicular to the orientation direction is selected to be between 1.2 and 5, so that the complex elastic modulus $Ea^*$, in the orientation direction is larger than the complex elastic modulus $Eb^*$ in the direction perpendicular to the orientation direction.

The ratio $Ea^*/Ec^*$ of the complex elastic modulus $Ea^*$ in the orientation direction to the complex elastic modulus $Ec^*$ of the rubber in the regions other than the groove walls 10 is chosen to be between 1.2 and 3.

The ratio $Eb^*/Ec^*$ of the complex elastic modulus $Eb^*$ in the direction perpendicular to the orientation direction to the complex elastic modulus $Ec^*$ of the tread rubber is chosen to be between 0.6 and 1.

Accordingly, the complex elastic modulus $Eb^*$ in the direction perpendicular to the orientation direction is smaller in a specified range than the complex elastic modulus $Ec^*$ of the tread rubber.

In this specification, the complex elastic modulus was measured by using a viscoelastic spectrometer manufactured by IWAMOTO SIESAKUSYO, using the conditions of 10 Hz frequency, 70 degrees temperature and 2% dynamic distortion, using a sample measuring 4mm in width, 30 mm in length and 2 mm in thickness. For the short fibres organic fibres such as nylon, rayon, polyester, aromatic polyamide, cellulose resin, crystalline polybutadiene or carbon fibres, and/or inorganic fibres such as metallic fibres, whisker boron, or glass fibres are used.

These short fibres may be used in various dimensions, ranging from about 1 to 20mm in length and 2mm to 1mm in thickness so that the above complex elastic moduli $Ea^*$ and $Eb^*$ are obtained.

For example, if the short fibres 12 are made of organic material with a density of 1 to 2, in order to obtain the reinforced rubber material having the above-mentioned complex elastic moduli $Ea^*$ and $Eb^*$, the short fibres 12 are blended at between 5 to 30 parts by weight of 100 parts by weight of the rubber base.

As shown in Fig.2 the reinforced rubber material is disposed along the groove wall surfaces W, so that the short fibres 12 are laid substantially parallel to the groove wall surface W, and their longitudinal directions, that is, the orientation direction is arranged in the depthwise direction of the groove in the groove walls 10.

As the short fibres 12 are thus arranged in the depthwise direction along the surface W of the groove walls, the radial rigidity is increased, but the increase of the circumferential rigidity is suppressed at the same time, note that the expression "in the depthwise direction along the surface W of the groove wall" means that the short fibres 12 can be inclined with respect to a radial plan including the tyre axis, for example, arranging the short fibres 12 in the perpendicular direction to the zigzag groove direction along the groove wall surface W.

The groove walls 10 have a thickness T of 5 to 30% of the groove depth L. If less than 5%, the effect of increasing the radial rigidity becomes poor, and if over 30%, it is difficult to manufacture.

Incidentally, if the complex elastic modulus $Ea^*$ in the orientation direction of the short fibres 12 is greater than 3 times the complex elastic modulus $Ec^*$ of the tread rubber, the compressive rigidity of the groove walls 10 becomes excessive, and the groove wall 10 is left over, during abrasion by travelling, and remains raised up from the tread surface, thereby spoiling the appearance. Therefore, the ratio $Ea^*/Ec^*$ is limited to be not more than 3. If the ratio $Ea^*/Ec^*$ is smaller than 1.2 times, the effect in suppressing uneven wear abrasion is decreased. Therefore, the ratio $Ea^*/Ec^*$ is preferably set to be 1.6 to 2.4. If, meanwhile, the circumferential rigidity of the groove walls 10 is greater than that of the tread rubber, as mentioned earlier, that part is liable to slip on the road surface and to have increased stress when moving towards the groove centre region, and as a result abrasion is promoted.

Therefore, the complex elastic modulus $Eb^*$ in the direction perpendicular to the orientation direction of the short fibres 12 is made smaller than the complex elastic modulus $Ec^*$ of the tread rubber.

Besides, when the ratio is less than 0.6 times, the wear resistance of the rubber itself of the groove walls 10 is lowered.

Therefore, the ratio $Eb^*/Ec^*$ is set to be 0.6 to 1.0, and more preferably somewhere between 0.7 and 0.9. As a result, the ratio $Ea^*/Eb^*$ of the complex elastic modulus in the orientation of the short fibres 12 to that in the direction perpendicular thereto is set to be, as mentioned above, 1.2 to 5, and more preferably set somewhere between 1.78 and 3.

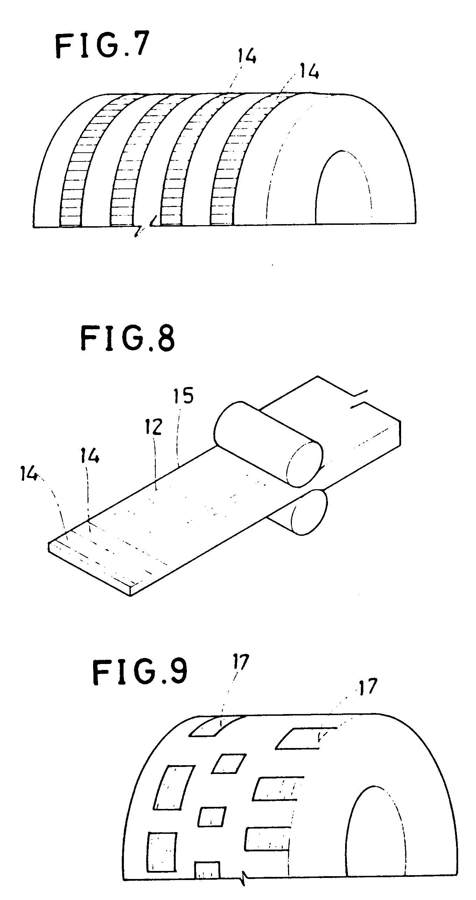

In order to form such grooves walls 10 as shown in Fig 2 strips of reinforced rubber material sheet 14 are disposed on a raw tyre as shown in Fig.7, that is, on the raw tread rubber parallel to the circumferential direction of the tyre at the positions of longitudinal grooves 3 and 4. Then the raw tread rubber and the strips 14 of the reinforced rubber material sheet are formed into grooves on moulding and vulcanising the raw tyre.

The reinforced rubber material sheet is a wide sheet 15 moulded or extruded by calendar rolls, as shown in Fig.8, with the short fibres 12 embedded therein arranged uniformly in the longitudinal direction thereof.

The wide sheet 15 is subsequently cut at right angles into the desired width strips 14 & 16.

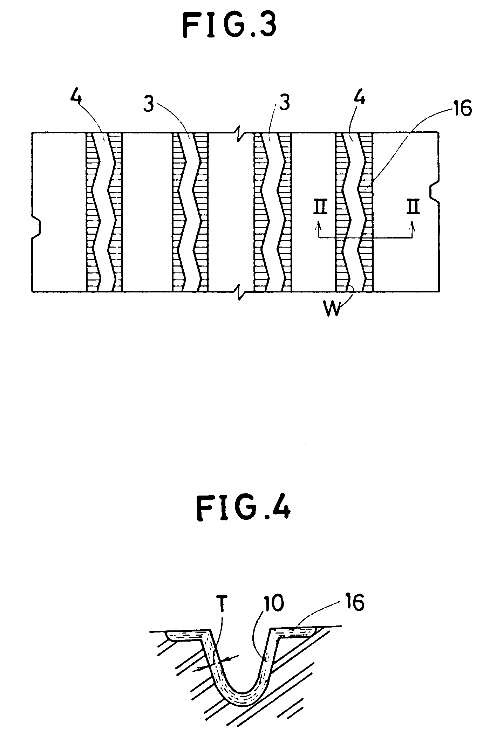

As shown in Fig.4 when it is required to form a groove wall having extensions 16 along the upper surface of the ribs 5,6, 7 the reinforced rubber material strips are cut and laid as in Fig.3.

In order to assist obtaining a tyre having the groove walls 10 shown in Fig.1, the reinforced rubber material strips 14 may be formed in a zigzag shape conforming to the zigzag shape of the longitudinal grooves 3 and 4.

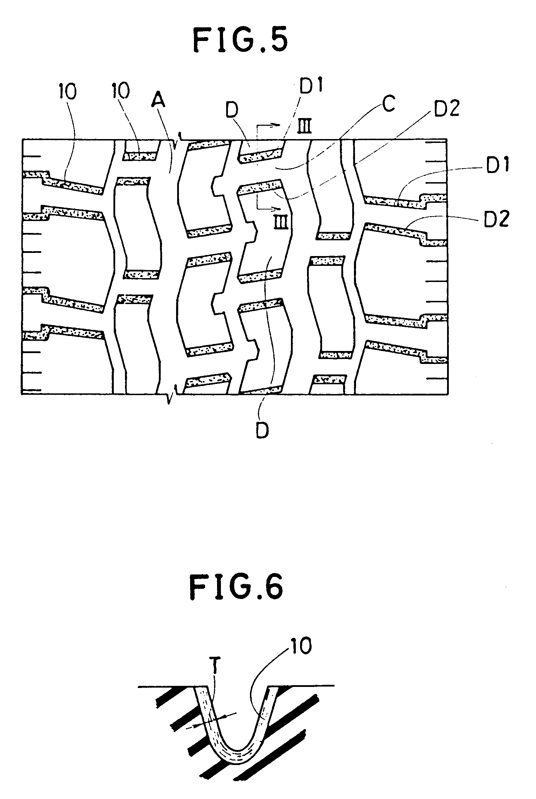

Further, in a block type tyre as shown in Fig.5, when installing the reinforced rubber material in the groove walls 10 of transverse grooves C, that is, the leading edges D1 and the trailing edges D2 of the blocks, pieces of reinforced rubber material sheet 17 are applied to the required parts of the transverse grooves C as shown in Fig.9.

Various kinds of truck test tyres of size 10.00R20 having five ribs as shown in Fig.1 were manufactured by way of experiment, as working example tyres 1 to 4 and reference example tyres 1 to 4, according to the specifications given in Table 1.

TABLE 1

| | Working Ex. Tire | | | | Reference Tire | | | |
|---|---|---|---|---|---|---|---|---|
| | 1 | 2 | 3 | 4 | 1 | 2 | 3 | 4 |
| Tread rubber compound *1 | | | | | | | | |
|   Natural rubber | 100 | 100 | 100 | 100 | 100 | 100 | 100 | 100 |
|   Carbon black ISAF | 48 | 48 | 48 | 48 | 48 | 40 | 60 | 48 |
| Fiber reinforced rubber material *1 | | | | | | | | |
|   Natural rubber | 100 | 100 | 100 | 100 | | | | 100 |
|   Carbon black ISAF | 40 | 40 | 30 | 30 | | | | 48 |
|   Short fiber   *2 | 10 | 20 | 20 | 30 | | | | 40 |
| Groove wall part | | | | | | | | |
|   Thickness T   (mm) | 2.5 | 2.5 | 2.5 | 2.5 | | | | 2.5 |
| Complex elastic modulus | | | | | | | | |
|   $E_a^*$   (kgf/sq.cm) | 92 | 121 | 109 | 162 | | | | 340 |
|   $E_b^*$   (kgf/sq.cm) | 50 | 51 | 36 | 38 | | | | 62 |
|   $E_c^*$   (kgf/sq.cm) | 58 | 58 | 58 | 58 | 58 | 49.5 | 70.5 | 58 |
|   $E_a^*/E_b^*$ | 1.8 | 2.4 | 3.0 | 4.3 | | | | 5.5 |
|   $E_a^*/E_c^*$ | 1.6 | 2.1 | 1.9 | 2.8 | | | | 5.9 |
|   $E_b^*/E_c^*$ | 0.86 | 0.88 | 0.62 | 0.66 | | | | 1.1 |
| Uneven wear H   (mm) | 0.2 | 0.3 | 0.6 | 0.5 | 1.7 | 2.4 | 1.9 | -0.7 |

NOTE:
*1 Table 1 refers to parts by weight. In addition to the above rubber base and reinforcing agent, the following additives were commonly contained.

| | |
|---|---|
| Aromatic oil | 2 |
| Antiaging agent IPPD | 1.5 |
| Microcrysralline wax | 1.0 |
| Stearic acid | 2.5 |
| Zinc white | 4.5 |
| Sulfur | 1.5 |
| Promoter MSA | 0.75 |

*2 Cellulose type fibers: Santwave R (Tradename)

Each tyre was mounted on its specified rim, and inflated to an internal pressure of 7.25 kgf/sq.cm, and after running on paved roads for 50,000 km, the step difference H due to wear of the rib corners B1 was measured at 10 positions. The mean value is shown in Table 1.

In each of the working example tyres 1 to 4, the amount of uneven wear was small compared to the reference examples.

In the reference example 4 having an excessively large complex elastic modulus $E_a^*$, the groove walls were swollen by 0.7 mm.

Thus, the tyre according to the present invention has been disclosed to have a sufficient durability to uneven wear.

Also as described herein, in the radial tyre of the present invention, since the groove walls are formed by a reinforced rubber material blended with short fibres and these short fibres are oriented in the direction running along the groove wall surface, the radial rigidity or the compressive rigidity can be enhanced while lowering the circumferential rigidity, and it is possible to enhance the wear resistance while decreasing the stress at the time of movement towards the groove. As a result, uneven wear such as railway wear and heel-and-toe wear can be prevented, and the appearance of the tyre may be enhanced, and the service life of the tyre may be extended while maintaining the traction and braking performance.

**Claims**

1. A radial tyre having a tread (2) provided with a groove (3,4,c) with opposed groove walls (10), said groove walls (10) made of a fibre reinforced rubber material disposed on each side of the groove (3,4,c) to form said groove walls (10), said fibre reinforced rubber material being compounded of a rubber base and short fibres (12) said rubber base comprising at least one of natural rubber, polyisoprene rubber, butadiene rubber and polybutadiene rubber and said short fibres in each groove wall (10) being made of organic material, mixed at 5 to 30 parts by weight of fibres to 100 parts by weight of the rubber base in the reinforced rubber material, and oriented in the depthwise direction of the groove (3,4,c) along the surface of the groove wall (10), characterised in that the reinforced rubber material has the following ratios between its complex elastic modulus Ea* in the direction of orientation of the short fibres, its complex elastic modulus Eb* in the direction perpendicular to said orientation direction, and the complex elastic modulus Ec* of the rubber in the other parts of the tread than the groove wall parts:

$1.2 < Ea^*/Eb^* < 5$,
$1.2 < Ea^*/Ec^* < 3$, and
$0.6 < Eb^*/Ec^* 1$.

2. A radial tyre according to claim 1 characterised by the pattern (2) being a block pattern and the fibre reinforced material groove walls (10) are the leading and trailing edges of the blocks of the pattern.

**Patentansprüche**

1. Radialreifen, der einen mit einem mit einer Nut (3, 4, c) mit einander gegenüber liegenden Nutwänden (10) versehenen Laufstreifen (2) besitzt, wobei die Nutwände (10) aus faserverstärktem Gummimaterial hergestellt sind, das an jeder Seitenwand der Nut (3, 4, c) angelegt ist, um die Nutwände (10) zu bilden, das faserverstärkte Gummimaterial aus einem Gummigrundmaterial und kurzen Fasern (12) zusammengesetzt ist, das Gummigrundmaterial mindestens ein Material aus Naturgummi, Polyisoprengummi, Butadiengummi und Polybutadiengummi umfaßt und die kurzen Fasern in jeder Nutwand (10) aus organischem Material hergestellt sind, wobei 5 bis 30 Gew.-Teile Fasern auf 100 Gew.-Teile Gummigrundmaterial in dem verstärkten Gummimaterial gemischt und in der Tiefenrichtung der Nut (3, 4, c) längs der Oberfläche der Nutwand (10) ausgerichtet sind, dadurch gekennzeichnet, daß das verstärkte Gummimaterial die folgenden Verhältniswerte zwischen seinem komplexen Elastizitätsmodul Ea* in der Orientierungsrichtung der kurzen Fasern, seinem komplexen Elastizitätsmodul Eb* in der zu der Orientierungsrichtung senkrechten Richtung und dem komplexen Elastizitätsmodul Ec* des Gummis in den anderen Teilen des Laufstreifens außer den Nutwandteilen besitzt:

$1,2 < Ea^*/Eb^* < 5$,
$1,2 < Ea^*/Ec^* < 3$, und
$0,6 < Eb^*/Ec^* < 1$.

2. Radialreifen nach Anspruch 1, dadurch gekennzeichnet, daß das Muster (2) ein Blockmuster ist und daß die Nutwände (10) aus faserverstärktem Material die vorderen und die hinteren Kanten der Blöcke des Musters sind.

**Revendications**

1. Pneumatique à carcasse radiale ayant une bande de roulement (2) qui a une gorge (3, 4, c) ayant des parois opposées (10), les parois (10) des gorges étant formées d'un matériau à base de caoutchouc renforcé de fibres, placé des deux côtés de la gorge (3, 4, c) pour la formation des parois (10), le matériau à base de caoutchouc renforcé de fibres étant formé par un mélange d'une base de caoutchouc et de fibres courtes (12), la base de caoutchouc contenant au moins du caoutchouc naturel, du caoutchouc de polyisoprène, du caoutchouc de butadiène ou du caoutchouc de polybutadiène, et les courtes fibres de chaque paroi (10) étant formées d'une matière organique, mélangée à raison de 5 à 30 parties en poids de fibres pour 100 parties en poids de base de caoutchouc dans le matériau à base de caoutchouc renforcé, et ayant une orientation dans la direction de la profondeur de la gorge (3, 4, c) le long de la surface de la paroi (10) de la gorge, caractérisé en ce que le matériau renforcé à base de caoutchouc présente les rapports suivants entre son module complexe d'élasticité Ea* dans la direction d'orientation des fibres courtes, son module complexe d'élasticité Eb* en direction perpendiculaire à la direction d'orientation, et le module complexe d'élasticité Ec* du caoutchouc dans les parties de la bande de roulement autres que celles des parois de la gorge :

$1,2 < E_a^*/E_b^* < 5$
$1,2 < E_a^*/E_c^* < 3$
$0,6 < E_b^*/E_c^* < 1$

2. Pneumatique à carcasse radiale selon la revendication 1, caractérisé en ce que la sculpture (2) est une sculpture à blocs et les parois (10) des gorges formées de matériau armé de fibres sont les bords antérieur et postérieur des blocs de la sculpture.

# FIG.1

# FIG.2

# FIG.3

# FIG.4

# FIG.5

# FIG.6

## FIG.7

## FIG.8

## FIG.9

# FIG.10

# FIG.11

# FIG.12